# EUROPÄISCHE PATENTSCHRIFT

(11) **EP 0 941 926 B1**
(45) Veröffentlichungstag und Bekanntmachung des Hinweises auf die Patenterteilung: **29.08.2001**
(21) Anmeldenummer: 98123926.2
(22) Anmeldetag: 16.12.1998
(51) Int. Cl.: B64G 1/58, C04B 35/80, C23C 16/04, B64G 1/22

(54) **Bewegbare Baukomponente für eine thermomechanisch belastete Bauanordnung sowie ein Verfahren zur Herstellung der Baukomponente**
Movable construction components for a thermomechanically stressed assembly and method for their production
Composants constructifs mobiles pour un dispositif sous charge thermo-mécanique et méthode pour leur production

(30) Priorität: 09.03.1998 DE 19810067
(43) Veröffentlichungstag der Anmeldung: 15.09.1999
(73) Patentinhaber: MAN Technologie AG, 86153 Augsburg (DE)
(72) Erfinder: Wildenrotter, Karl, 85757 Karlsfeld (DE); Körberle, Hermann, Dr., 85757 Karlsfeld (DE); Peetz, Kilian, 85211 Dachau (DE); Mühlratzer, August, Dr., 81245 München (DE)
(74) Vertreter: Schwarzensteiner, Marie-Luise

(56) Entgegenhaltungen:
- EP-A- 0 799 809
- DE-A- 4 303 016
- WURTINGER H, MÜHLRATZER A: "Cost effective Manufacturing Methods for structural Ceramic Matrix Composite (CMC) Components" PROCEEDINGS OF THE 1996 INTERNATIONAL GAS TURBINE AND AEROENGINE CONGRESS & EXHIBITION, 10. - 13. Juni 1996, XP000865972 Birmingham, UK

## Beschreibung

Die vorliegende Erfindung betrifft eine bewegbare Baukomponente für eine thermomechanisch belastete Bauanordnung aus einer faserverstärkten Keramik, insbesondere für Wiedereintrittskörper in der Luft- und Raumfahrttechnik sowie ein Verfahren zur Herstellung der Baukomponente.

Rückkehrfähige Raumfahrzeuge, wie beispielsweise der Shuttle Orbiter, benötigen für den Wiedereintritt in die Erdatmosphäre ein unter anderem hitzebeständiges Schutzschild. Bei dem Shuttle Orbiter der Vereinigten Staaten von Amerika werden dazu der Rumpf und die Steuerflächen, die aus metallischen Werkstoffen bestehen, mit Kacheln aus einer verfestigten Faserisolation bedeckt. Diese verhindern, daß die metallischen Bauelemente unter der Einwirkung der durch die große Fluggeschwindigkeit hoch erhitzten, in den Plasmazustand versetzten Luft so stark erwärmt werden, daß sie ihre Festigkeit bzw. Formstabilität verlieren und unter der Flugbelastung sogar zerstört werden. Ähnliche oder identische Probleme ergeben sich bei allen thermisch hochbelasteten Bauteilen, die im Werkzeug- und Maschinenbau Anwendung finden.

Bauanordnungen, Bauelemente bzw. Bauteile, welche auf durch nachträglich aufgebrachte bzw. aufgeklebte Isolationen basieren, weisen erhebliche und im Stand der Technik bekannte Nachteile auf.

Beispielsweise müssen die thermomechanisch höchstbelasteten Komponenten eines rückkehrfähigen Raumfahrzeuges, das sind insbesondere die Steuerklappen und dergleichen Steuerflächen, durch hochwarmfeste Metallegierungen, sogenannte Superlegierungen, ausgerüstet sein. Diese weisen ein hohes spezifisches Gewicht auf. Hinzu kommt noch das Gewicht der thermischen Isolierung. Es sind sehr dichte Isolationsmaterialien zu verwenden, um den Einwirkungen auf eine solche Außenverkleidung ausreichenden Widerstand entgegenbringen zu können.

Trotz der aus dem Stand der Technik bekannten Verwendung sehr dichter Faserisolierungen erfordert ein Hitzeschild nach Art des Shuttle Orbiter einen hohen Ausbesserungs- und Erneuerungsaufwand, weil die Anbringung durch Kleben und die geringe Festigkeit des Isolationsmateriales unter den beschriebenen Einsatzbedingungen häufig zu Beschädigungen oder sogar zur vollständigen Zerstörung führen können. Hinzu kommt noch das Gewicht der thermischen Isolierung, das sich auf das Gesamtgewicht des Flugkörpers ungünstig auswirkt.

Aufgabe der vorliegenden Erfindung ist es demnach, die genannten technischen und wirtschaftlichen Probleme zu überwinden, indem Baukomponenten zur Verfügung gestellt werden, welche werkstoff- und baukomponenteninhärent insgesamt eine Erhöhung der thermischen und mechanischen Belastbarkeit ermöglichen. Verbunden mit dem Bau von Flugkörpern wird eine erhebliche Gewichtsreduzierung der Baukomponenten und deren Wiederverwendbarkeit angestrebt.

Idee der Erfindung ist es, Baukomponenten, insbesondere für rückkehrfähige Raumfahrzeuge, aus einer Faserverbundkeramik aufzubauen. Dabei könnten je nach den mechanischen und thermischen Anforderungen, welche an einzelne Elemente der Baukomponenten zu richten sind, unterschiedlich hergestellte Werkstoffe, sogenannte CMC-Werkstoffe (Ceramic Matrix Composites), verwendet werden.

Gegenstand der vorliegenden Erfindung ist demnach eine bewegbare Baukomponente für eine thermomechanisch belastete Bauanordnung, welche wenigstens teilweise aus einer faserverstärkten Keramik aufgebaut ist. Dabei umfaßt die bewegbare Baukomponente wenigstens ein mittels Polymerinfiltrations- und Pyrolyseverfahren (nachfolgend auch LPI-Verfahren genannt) gebildetes Bauelement und mindestens ein mittels Gasphaseninfiltrationsverfahren (nachfolgend auch CVI-Verfahren genannt) gebildetes Bauelement.

Mit den erfindungsgemäßen Baukomponenten ist eine 40%-ige Gewichtseinsparung sowie eine signifikante Verminderung der Unterhaltsaufwendungen gegenüber dem Stand der Technik möglich. Die Verminderung der Unterhaltsaufwendung ergibt sich daraus, daß die erfindungsgemäßen Baukomponenten mechanisch und thermisch extrem belastbar sind und somit beispielsweise bei deren Eintritt in die Erdatmosphäre weniger beschädigt oder sogar zerstört werden.

Als faserverstärkte Keramiken werden im Rahmen der Erfindung solche in Betracht gezogen, die auf hochtemperaturstabilen Fasern basieren. Das sind insbesondere Kohlenstoffasern, die in eine Siliciumcarbidmatrix eingebettet sind (C/SiC-Keramik), Siliciumcarbidfasern, die in eine Siliciumcarbidmatrix (SiC/SiC-Keramik) oder eine Siliciumnitridmatrix (SiC/Si₃N₄-Keramik) eingebettet sind, Aluminiumoxidfasern, die in eine Aluminiumoxidmatrix eingebettet sind (Al₂O₃/Al₂O₃-Keramik), Mullitfasern, die in eine Mullitkeramik eingebettet sind, oder Polyborosilazanfasern (SiBNC), die in eine Polycarbosilan-, Polysilazan- oder Siliciumcarbidmatrix eingebettet sind. Die Eigenschaften dieser mit Endlosfasern verstärkten Keramikwerkstoffe sind größtenteils bekannt und werden beispielsweise in Metall, S. 434 ff (1991) von A. Mühlratzer und H. Köberle diskutiert. Diese Werkstoffe lassen sich aber durch die Art ihrer Herstellung und Ver- bzw. Bearbeitung wesentlich beeinflussen. Eine Erörterung geeigneter Faser- bzw. Keramikmaterialien findet sich auch in "Advanced Materials 2 (1990) Nr. 9, Seiten 398 bis 404" und "Journal of European Ceramic Society 12 (1990), Seiten 27 bis 41".

Im Rahmen der vorliegenden Erfindung werden insbesondere kohlenstoffaserverstärkte Siliciumcarbidkeramiken (C/SiC-Keramiken) in Betracht gezogen, welche endformnah, d.h. angepaßt an die Endform des Bauelementes entweder über das Gasphaseninfiltrationsverfahren (CVI-Verfahren) oder über das Polymerinfiltrations- und Pyrolyseverfahren (LPI-Verfahren) hergestellt werden. Der nach dem CVI-Verfahren herstellbare Werkstoff eignet sich insbesondere für mechanisch hochbeanspruchte Teile. Das sind im Fall beispielsweise einer Steuerklappe eines Flugkörpers, die Längs- und Querlastträger, die Schubstange, die Lager und die Scharniere, wie im weiteren näher erläutert werden wird. Für mechanisch und thermisch weniger belastete Bauelemente eignet sich ebenso ein Werkstoff, der nach dem LPI-Verfahren hergestellt wird.

Im Rahmen der Erfindung zeichnet sich so die Baukomponente gemäß Anspruch 2 dadurch aus, daß das wenigstens eine mittels Polymerisationsinfiltrations- und Pyrolyseverfahren gebildete Bauelement als Grundkörper der bewegbaren Baukomponente ausgebildet ist. Diese zumeist großflächigen bzw. -volumigen Grundkörper werden insbesondere mechanisch weniger belastet, so daß ihre Herstellung nach dem LPI-Verfahren möglich ist.

Entsprechend den Merkmalen des Anspruchs 3 ist der Grundkörper aus wenigstens einem kastenförmigen Segment mit einer Bodenwand und daran integral angeformten Seitenwänden aufgebaut. Diese Maßnahme läßt eine weite Variation in der Endgröße der Baukomponente zu und ermöglicht damit eine Anpassung an den jeweiligen Einsatzzweck. Über die integral angeformten Seitenwände lassen sich einzelne kastenförmigen Segmente zu größeren Bauelementen bzw. Baukomponenten zusammenfügen.

In einer geeigneten Ausgestaltung der Erfindung ist die Bodenwand nach Anspruch 4 des wenigstens einen kastenförmigen Segmentes eine den Seitenwänden abgewandte und im wesentlichen ebene Fläche. Diese Ausgestaltung verhindert die Bildung von sogenannten hot spots und damit den voreiligen Verschleiß des Bauelementes durch thermische und/oder auch mechanische Beanspruchung.

Ferner liegt es im Rahmen der Erfindung, daß gemäß den Merkmalen des Anspruchs 5 der Übergangsbereich zwischen der Bodenwand und den Seitenwänden abgerundet ist. Auch diese Ausgestaltung verhindert oder minimiert die Bildung von hot spots.

Entsprechend den Merkmalen des Anspruchs 6 6 ist das wenigstens eine kastenförmige Segment des Grundkörpers durch, insbesondere integral, an der Bodenwand und den Seitenwänden angeordnete Verstärkungsrippen oder dergleichen ausgesteift. Diese Versteifungsrippen oder dergleichen verhindern unter mechanischer Belastung Torsionen des Bauelementes bzw. der Baukomponente und gestatten insbesondere die für Bauelemente bzw. Baukomponenten, wie beispielsweise den Steuerklappen eines rückkehrfähigen Flugkörpers, erforderliche Leichtbauweise. Diese Verstärkungsrippen können quer, längs oder diagonal angeordnet sein.

Des weiteren liegt es nach Anspruch 7 im Rahmen der Erfindung, daß das wenigstens eine kastenförmige Segment des Grundkörpers einen an den Seitenwänden lösbar befestigbaren Deckel oder dergleichen aufweist, der zum einen die Aussteifung des Segmentes fördert und durch seine im wesentlichen ebene Oberfläche eine mechanische Beanspruchung über das gesamte Bauelement verteilt.

In einer weiteren und ganz besonders bevorzugten Ausgestaltung der vorliegenden Erfindung ist gemäß Anspruch 8 der Grundkörper aus mehreren kastenförmigen Segmenten zusammengesetzt, die wie bereits erwähnt, über jeweils einander benachbarte Seitenwände miteinander verbindbar sind. Dies ermöglicht den Austausch einzelner möglicherweise beschädigter oder zerstörter Segmente und erlaubt bei der Konstruktion eine große Variationsmöglichkeit hinsichtlich der Größe des aufzubauenden Bauelementes bzw. der aufzubauenden Baukomponente.

Von großer Bedeutung für ein erfindungsgemäß ausgestaltetes Bauelement bzw. eine solche Baukomponente, die beispielsweise als Steuerklappe für einen rückkehrfähigen Flugkörper eingesetzt wird, sind die Merkmale des Anspruchs 9. Danach sind die mehreren kastenförmigen Segmente so nebeneinander angeordnet, daß die Fügungen zwischen den jeweils einander benachbarten Seitenwänden in einer Richtung verlaufen, die im wesentlichen parallel zu einer möglichen Bewegung der thermomechanisch belasteten Bauanordnung liegt. Diese besondere Anordnung der kastenförmigen Segmente zueinander ist im Zusammenhang mit Flugkörpern nicht nur strömungsgünstig, sondern verhindert auch das Entstehen von sogenannten hot spots, welche zur Zerstörung des Bauelementes oder eines einzelnen Segmentes davon führen können.

Wie eingangs bereits erwähnt, liegt es im Rahmen der vorliegenden Erfindung, daß nach den Merkmalen des Anspruchs 10 das mindestens eine mittels Gasphaseninfiltrationsverfahren gebildete Bauelement als Kraftübertragungs- und/oder Lagerelement der bewegbaren Baukomponente ausgebildet ist. Die im Gasphaseninfiltrationsverfahren endformnah erzeugten Keramiken weisen aufgrund der erhöhten Dichte eine sehr reine Matrix mit fein kristallinem, dichtem Gefüge auf, das dem Material eine hohe thermomechanische Beständigkeit, Steifigkeit, Druckfestigkeit und Verschleißbeständigkeit verleiht. Hervorzuheben ist auch die hohe Bruchzähigkeit der so hergestellten Materialien.

Entsprechend den Merkmalen des Anspruchs 11 ist/sind das Kraftübertragungselement und/oder auch das Lagerelement an dem Grundkörper der bewegbaren Baukomponente zu deren Bewegung angebracht.

Entsprechend den Merkmalen des Anspruchs 12 umfaßt das Kraftübertragungs- und Lagerelement wenigstens einen Längsträger und mindestens einen, vorzugsweise zwei, Querträger, die aneinander und an den Seitenwänden des wenigstens einen kastenförmigen Segmentes des Grundkörpers lösbar befestigbar sind. Im Fall, daß nur ein kastenförmiges Segment vorliegt, erstrecken sich der Längs- und/oder wenigstens der bzw. die Querträger jeweils etwa mittig zwischen den jeweiligen Seitenwänden.

Gemäß den Merkmalen des Anspruchs 13 sind ganz allgemein der wenigstens eine Längsträger und der mindestens eine, vorzugsweise die zwei, Querträger etwa mittig von dem Grundkörper aufgenommen und an diesem angebracht. Damit ergibt sich eine größtmögliche Stabilität der Baukomponente bezüglich ihrer Bewegung relativ zu einer Bauanordnung, mit der sie verbunden ist.

Nach Anspruch 14 umfaßt das Krafübertragungs- und Lagerelement mindestens eine Schubstange oder dergleichen, die eine von einem Motor erzeugte Kraft über den wenigstens einen Längsträger und den mindestens einen, vorzugsweise die zwei, Querträger auf den Grundkörper der bewegbaren Baukomponente überträgt.

Vorzugsweise umfaßt das Kraftübertragungs- und Lagerelement nach Anspruch 15 weiterhin ein Lager zwischen dem wenigstens einen Längsträger und dem mindestens einen, vorzugsweise den zwei, Querträgern sowie der mindestens einen Schubstange, das (halb-)kugel-, kalotten- oder dergleichen -förmig ausgebildet ist. Beim Eintritt in die Erdatmosphäre ist ein rückkehrfähiger Flugkörper, insbesondere dessen Steuerklappen, nicht nur thermischen, sondern auch großen mechanischen Belastungen ausgesetzt, welche Seitenverwindungen und häufig sogar lokale Verpressungen an der Baukomponente bzw. der Bauanordnung hervorrufen können. Solche Seitenverwindungen können durch die erfindungsgemäß eingesetzten Lager aufgefangen bzw. ausgeglichen werden, welche (halb-)kugel-, kalotten- oder dergleichen -förmig ausgebildet sind.

Nach den Merkmalen des Anspruchs 16 weist dazu das Lager in bevorzugter Weise eine (halb-)kugel-, kalotten- oder dergleichen -förmig ausgestaltete Lagerbuchse auf, die über einen Lagerbolzen oder dergleichen an dem mindestens einen Längsträger abgestützt ist, und eine mit der Lagerbuchse zusammenwirkende Lagerbuchsenaufnahmeeinrichtung, die endseitig an der Schubstange angebracht ist, und umgekehrt.

Zur Stabilisierung bzw. stabileren beweglichen Verbindung der Baukomponente mit der Bauanordnung ist bzw. sind nach Anspruch 17 des weiteren bevorzugt mindestens ein, vorzugsweise zwei, weitere Lagerelemente zur beweglichen Verbindung der bewegbaren Baukomponente mit der Bauanordnung an wenigstens einer der Seitenwände des wenigstens einen kastenförmigen Segmentes angeordnet, das bzw. die insbesondere scharnierförmig ausgebildet ist bzw. sind.

Bei einer besonders geeigneten Ausführungsform der erfindungsgemäßen Baukomponente sind nach Anspruch 18 wenigstens eine, vorzugsweise zwei, der Seitenwände verlängert und im endseitigen Bereich mit Bohrungen zur Aufnahme von korrespondierenden Lagerbolzen oder dergleichen der Bauanordnung versehen, deren Bohrungsachse zueinander bzw. zur Drehachse des einen Lagers ausgerichtet ist bzw. sind. Die Bohrungsachsen sind mithin zueinander bzw. zur Drehachse des einen Lagers parallel angeordnet.

Bei einer weiteren bevorzugten Ausführungsform der erfindungsgemäßen Baukomponente sind nach Anspruch 19 die Seitenwände und/oder Längsträger und/oder Querträger und/oder die Schubstange hohlprofiliert ausgebildet. Diese Maßnahme fördert die gewünschte Leichtbauweise der Gesamtkonstruktion bei einer gleichzeitig hohen Steifigkeit.

Ein wesentliches Kennzeichen der vorliegend beanspruchten Baukomponente ist nach Anspruch 20, daß zur Erhöhung ihrer mechanischen und thermischen Stabilität mittels Gasphaseninfiltration gebildete Verbindungselemente, wie Schrauben, Bolzen, Nieten und dergleichen, zur lösbaren Verbindung der Bauelemente miteinander vorgesehen sind, die insbesondere im Bereich der Seitenwände und des Grundkörpers eingesetzt werden. Derarte Verbindungselemente sind naturgemäß großen mechanischen Beanspruchungen ausgesetzt und stellen Ansatzpunkte für die Ausbildung von hot spots dar. Die Materialauswahl und Anordnung der Verbindungselemente trägt zur weiteren Stabilisierung der Baukomponente bei.

Ein weiteres Kennzeichen der vorliegenden Erfindung ist nach Anspruch 21, daß die Bauelemente zum Schutz und zur Stabilisierung ihrer äußeren Oberfläche, insbesondere zum Schutz vor Oxidation, gegebenenfalls mit einer geeigneten Schutzschicht versehen sind. Für nach dem CVI-Verfahren hergestellte Bauelemente verwendet man dann wenigstens -eine etwa 100*µ*m dicke Schicht, die dann im wesentlichen aus dem gleichen Material gebildet ist, wie das die Matrix bildende Material. Diese Schicht wird mittels Chemischer Gasphasenabscheidung aufgetragen. Im Falle einer C/SiC-Keramik, einer SiC/SiC-Keramik oder artverwandten Keramiken ist eine solche Schutzschicht insbesondere wirksam, wenn wenigstens eine borhaltige Siliciumcarbidschicht vorgesehen wird. Teile ohne Fügeflächen können auch mit einer reinen Siliciumcarbidschicht ausgerüstet werden, auf die eine mehrphasig aufgebaute, aus einer Glasmatrix mit eingelagerten Refraktärphasen bestehende Deckschicht gemäß den deutschen Patentschriften P 40 34 001 und P 44 43 789 aufgebracht ist.

Wie bereits mehrmals ausgeführt worden ist, kann die vorangehend beschriebene Baukomponente für eine thermomechanisch belastete Bauanordnung beispielsweise als bewegbare Steuerklappe oder dergleichen eines Flugkörpers ausgebildet sein. Insbesondere rückkehrfähige Raumfahrzeuge, welche bekannterweise beim Eintritt in die Erdatmosphäre großen thermischen und mechanischen Belastungen ausgesetzt sind, sowie auch Steuerflächen diverser militärischer Flugkörper, welche ähnliche Belastungen erfahren, können sich eine erfindungsgemäße Baukomponente zunutze machen. Ebenso ist es denkbar, daß die erfindungsgemäßen Baukomponenten zur Ausführung thermisch und mechanisch hochbelasteter Werkzeuge oder Maschinenteile Verwendung finden.

Die Erfindung betrifft auch ein Verfahren zur Herstellung der vorangehend beschriebenen Baukomponente aus einer faserverstärkten Keramik für eine thermomechanisch belastete Bauanordnung nach Anspruch 23. Dabei wird wenigstens ein Bauelement im LPI-Verfahren erzeugt, mindestens ein Bauelement wird im CVI-Verfahren gebildet und die Bauelemente werden zu der beanspruchten Baukomponente in geeigneter Weise zusammengefügt.

Nach Anspruch 24 erfolgt dieses Zusammenfügen der Bauelemente vorzugsweise mittels im CVI-Verfahren erzeugter Verbindungselemente, wie Schrauben, Bolzen, Nieten oder dergleichen.

Die voranstehenden Verfahren weisen unterschiedliche Vorteile auf, die in geeigneter Weise für die einzelnen Baukomponenten, insbesondere eine Steuerklappe für rückkehrfähige Raumfahrzeuge, genutzt werden können.

Grundsätzlich ist für Leichtbaukonstruktionen die Integralbauweise zu bevorzugen. Die bekannten Herstellungsverfahren für Faserverbundkeramiken erlauben diese Bauweise für großflächige bzw. -volumige Komponenten jedoch nur im eingeschränkten Umfang. Erfindungsgemäß wurde dementsprechend eine sogenannte Hybridbauweise entwickelt, bei der mechanisch hoch beanspruchte Bauelemente einer Baukomponente, das sind beispielsweise bei der vorgenannten Steuerklappe die Längs- und Querlastträger, die Schubstange, die Lager und die Scharniere, über das sogenannte CVI-Verfahren, insbesondere das Gradienten CVI-Verfahren, hergestellt werden. Dieses Verfahren liefert bezüglich der thermomechanischen Eigenschaften ein Hochleistungsmaterial. Wesentliches Merkmal dieser Materialien ist ihre Matrix mit fein kistallinem, dichtem Gefüge, das dem Material die hohe thermomechanische Beständigkeit, Steifigkeit, Druckfestigkeit und Verschleißbeständigkeit verleiht. Wesentlich ist auch die hohe Bruchzähigkeit dieses Materiales im Zusammenhang mit dem Bau von Sicherheitsbauteilen.

Bauelemente, welche weniger stark mechanisch beansprucht werden, wie beispielsweise der Steuerklappenkörper eines rückkehrfähigen Raumfahrzeuges, werden erfindungsgemäß nach dem sogenannten LPI-Verfahren hergestellt. Dabei werden allgemein entweder Gewebezuschnitte im Naßlaminierverfahren auf Formen abgelegt oder trocken in Formgesenke eingelegt und nach dem RTM (Resin Transfer Molding)-Verfahren mit dem die Matrix bildenden Harz verfüllt.

Erfindungsgemäß werden demnach die Bauelemente, welche nach den LPI-Verfahren erzeugt werden, nach Anspruch 25 wie folgt hergestellt: Man legt Gewebezuschnitte aus thermisch hochbelastbaren Fasern auf endformnahen Positivformen oder in solchen Formgesenken ab; man tränkt die so abgelegten Gewebezuschnitte vorzugsweise mit einem der Faser entsprechenden organischen Polymer(-harz); man härtet bei erhöhter Temperatur und erhöhtem Druck aus und unterwirft den so gebildeten Grünkörper einer Pyrolysebehandlung bei ca. 900° bis 1600°C zur Erzeugung einer faserverstärkten Matrix bzw. der erwünschten Keramikwerkstoffe.

In bevorzugter Weise erfolgt das Aushärten nach Anspruch 26 bei ca. 200°C und etwa 5 bar und wird die Pyrolysebehandlung bei etwa 1200°C durchgeführt.

Um die vorher erzeugten Bauelemente gegebenenfalls vor Oxidation zu schützen, - das ist insbesondere dann erforderlich, wenn Kohlenstoffasern oder mit Pyrokohlenstoff beschichtete Fasern zur Erzeugung der Keramik eingesetzt werden - werden diese erfindungsgemäß nach Anspruch 27 wenigstens teilweise mit wenigstens einer mittels Chemischer Gasphasenabscheidung (CVD-Verfahren) erzeugten Schutzschicht versehen. Dabei wird das die Schutzschicht bildende Material vorzugsweise dem die Matrix bildenden Material entsprechen.

Nach Anspruch 28 wird zur Erzeugung des mindestens einen im Gasphaseninfiltrationsverfahren (CVI-Verfahren) gebildeten Bauelementes eine Gewebebahn aus thermisch hochbelastbaren Fasern wenigstens teilweise und im Abstand mit einem geeigneten Klebstoff versehen, die Gewebebahn sodann zu einem im wesentlichen rohrförmigen Faservorformling mit geeignetem Durchmesser aufgewickelt, der Faservorformling in einen Gasphaseninfiltrationsreaktor eingesetzt und unter Einwirkung eines Methyltrichlorsilan/Wasserstoff-Prozeßgases oder eines entsprechenden Prozeßgases einer Gradienten-Gasphaseninfiltration unterworfen. Nähere Einzelheiten zu diesem Verfahren ergeben sich aus dem nachfolgenden Beispiel.

Wesentlich ist, daß man entsprechend Anspruch 29 zu Beginn einen Temperaturgradienten zwischen etwa 700°C im Inneren des rohrförmigen Faservorformlings und von etwa 1150°C im Reaktorraum einstellt.

Das erfindungsgemäße Verfahren zeichnet sich im weiteren nach Anspruch 30 dadurch aus, daß man thermisch hochbelastbare Fasern in ein entsprechendes Matrixbett einbringt, welche aus der Gruppe der Kohlenstoff-, Siliciumcarbid-, Aluminiumoxid-, Mullit- und/oder Polyborosilazanfasern ausgewählt werden.

Zur Ausbildung der Matrix werden Ausgangsstoffe ausgewählt, welche dem Fasermaterial weitgehend entsprechen. Bevorzugt wird eine C/SiC-Keramik eingesetzt.

Im folgenden wird die Erfindung anhand einer bevorzugten Ausführungsform und unter Bezugnahme auf die nachfolgenden Zeichnungen sowie durch ein Ausführungsbeispiel, in welchem das Herstellungsverfahren für die erfindungsgemäße Baukomponente angegeben ist, näher erläutert. Hierbei zeigen:
- Fig. 1: eine schematische, perspektivische Ansicht einer Ausführungsform von zwei erfindungsgemäß ausgebildeten bewegbaren Baukomponenten an einer thermomechanisch belasteten Bauanordnung,
- Fig. 2: eine schematische perspektivische, teilweise auseinandergezogene Explosionsansicht einer Ausführungsform eines erfindungsgemäßen mittels Polymerinfiltrations-und Pyrolyseverfahren gebildeten Bauelementes nach Fig. 1 in vergrößerter Darstellung,
- Fig. 3: eine perspektivische Ansicht der Ausführungsform des mittels Polymerinfiltrations- und Pyrolyseverfahren gebildeten Bauelementes nach Fig. 2 im montierten Zustand zusammen mit teilweise vorgesehenen erfindungsgemäßen Deckeln und Ausführungsformen von erfindungsgemäß ausgebildeten mittels Gasphaseninfiltrationsverfahren gebildeten Bauelementen,
- Fig. 4: eine schematische, teilweise auseinandergezogene Explosionsansicht der Ausführungsform der erfindungsgemäß ausgebildeten Bauelemente nach Fig. 3 ohne erfindungsgemäß vorgesehene Deckel,
- Fig. 5: eine vergrößerte perspektivische Teilansicht der Ausführungsform eines der erfindungsgemäß ausgebildeten mittels Gasphaseninfiltrationsverfahren gebildeten Bauelemente im montierten Zustand entsprechend Pfeil V in Fig. 4,
- Fig. 6: eine perspektivische Ansicht der Ausführungsform des erfindungsgemäßen mittels Polymerinfiltrations- und Pyrolyseverfahren gebildeten Bauelementes nach Fig. 2 im montierten Zustand ohne erfindungsgemäße Deckel, jedoch zusammen mit weiteren Ausführungsformen von erfindungsgemäß ausgebildeten mittels Gasphaseninfiltrationsverfahren gebildeten Bauelementen,
- Fig. 7: eine schematische, teilweise abgebrochene und auseinandergezogene Explosionsansicht der weiteren Ausführungsformen der erfindungsgemäßen mittels Gasphaseninfiltrationsverfahren gebildeten Bauelemente nach Fig. 6.

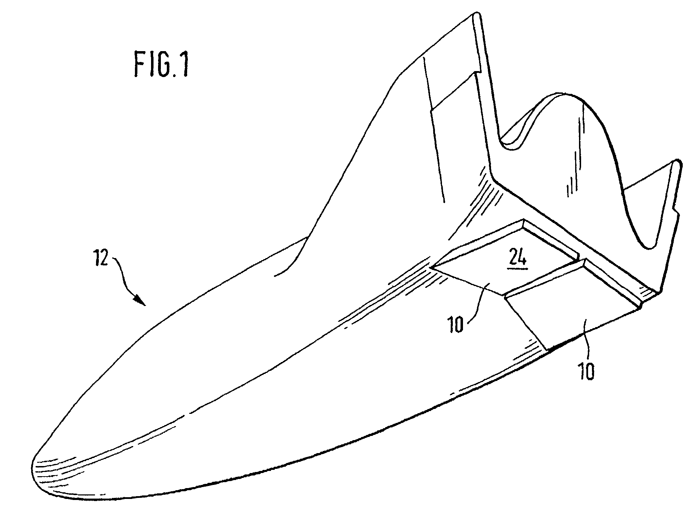

In der Fig. 1 ist schematisch eine Ausführungsform von zwei erfindungsgemäßen bewegbaren Baukomponenten 10 für eine mechanisch belastete Bauanordnung 12 dargestellt. Die zwei bewegbaren Baukomponenten 10 sind dabei beispielsweise als Steuerklappen, sogenannte body flaps, oder dergleichen Steuerflächen einer thermomechanisch hochbelasteten Bauanordnung 12 ausgebildet. Die Steuerklappen oder dergleichen Steuerflächen sind als Höhen- und Seitenruder vorgesehen. Zum Steuern der Nick- und Rollbewegungen und zum Trimmen des Anstellwinkels der Bauanordnung 12 sind die Steuerklappen oder dergleichen Steuerflächen beweglich, d.h. beispielsweise gegenüber der Bauanordnung 12 verschwenkbar, ausgestaltet.

Als thermomechanisch belastete Bauanordnung 12 sind Flugkörper gedacht, die sowohl thermisch als auch mechanisch extrem beansprucht sind. Insbesondere handelt es sich bei derartigen Flugkörpern um rückkehrfähige Raumfahrzeuge, wie beispielsweise den Shuttle Orbiter oder den in den Fig. 1 beispielhaft gezeigten Experimental-Raumgleiter X-38, die beim Wiedereintritt in die Erdatmosphäre solchen extremen thermischen und/oder mechanischen Bedingungen ausgesetzt sind. Dabei treten regelmäßig Betriebstemperaturen von ca. 1000 bis 2000°C auf. Darüber hinaus wirken ähnliche Belastungen auch beispielsweise auf militärische Flugkörper etc.

Die bewegbare Baukomponente 10 für eine thermomechanisch belastete Bauanordnung 12, die wenigstens teilweise aus faserverstärkter Keramik besteht, umfaßt wenigstens ein Bauelement, das mittels Polymerinfiltrations- und Pyrolyseverfahren gebildet ist, und mindestens ein Bauelement, das mittels Gasphaseninfiltrationsverfahren gebildet ist. Insoweit ist es auch durchaus möglich, daß die bewegbare Baukomponente 10 zusätzlich ein oder mehrere Bauelemente aufweist, die aus Metall oder einer eingangs erwähnten Metallegierung bestehen.

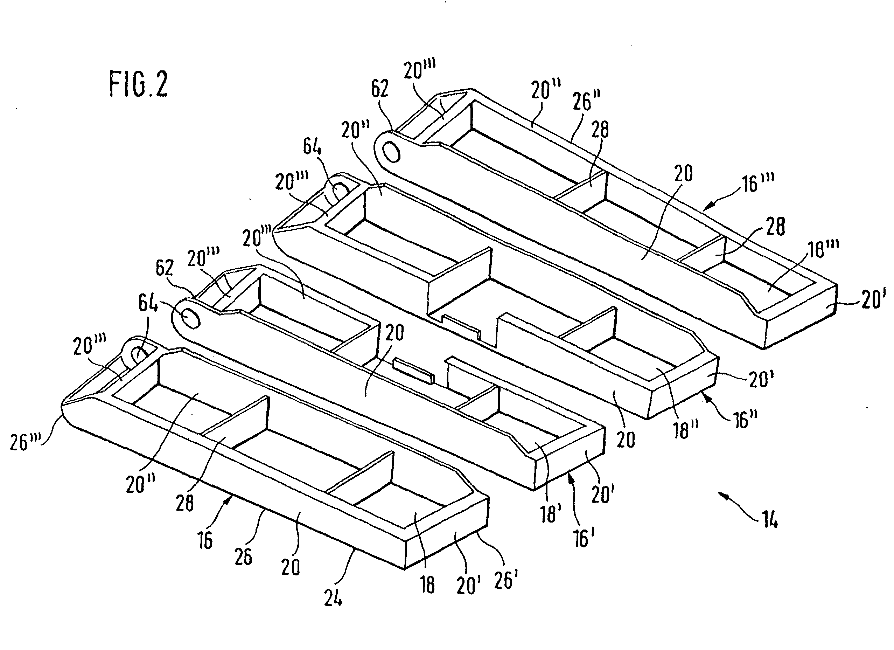

Entsprechend der Fig. 2 ist das wenigstens eine mittels Polymerinfiltrations- und Pyrolyseverfahren gebildete Bauelement als Grundkörper 14 der bewegbaren Baukomponente 10 ausgebildet. Der Grundkörper 14 besteht aus wenigstens einem kastenförmigen Segment 16 mit einer Bodenwand 18 und daran integral angeformten Seitenwänden 20, 20', 20'', 20'''. Wie insbesondere aus der Fig. 2 deutlich hervorgeht, ist der Grundkörper 14 bei diesem Ausführungsbeispiel aus mehreren, im wesentlichen länglichen kastenförmigen Segmenten 16, 16', 16'', 16''' zusammengesetzt. Die kastenförmigen Segmente 16, 16', 16'', 16''' sind dabei über jeweils einander benachbarte Seitenwände 20, 20'' miteinander verbindbar. Durch eine solche Ausbildung des Grundkörpers 14 läßt sich einerseits dessen Torsionssteifigkeit wesentlich erhöhen. Andererseits ist es auf einfache Weise möglich, einzelne kastenförmige Segmente 16, 16', 16'', 16''' zu Wartungs-und Reparaturzwecken gegebenenfalls zu demontieren und anschließend wieder zu montieren oder sogar gänzlich auszutauschen.

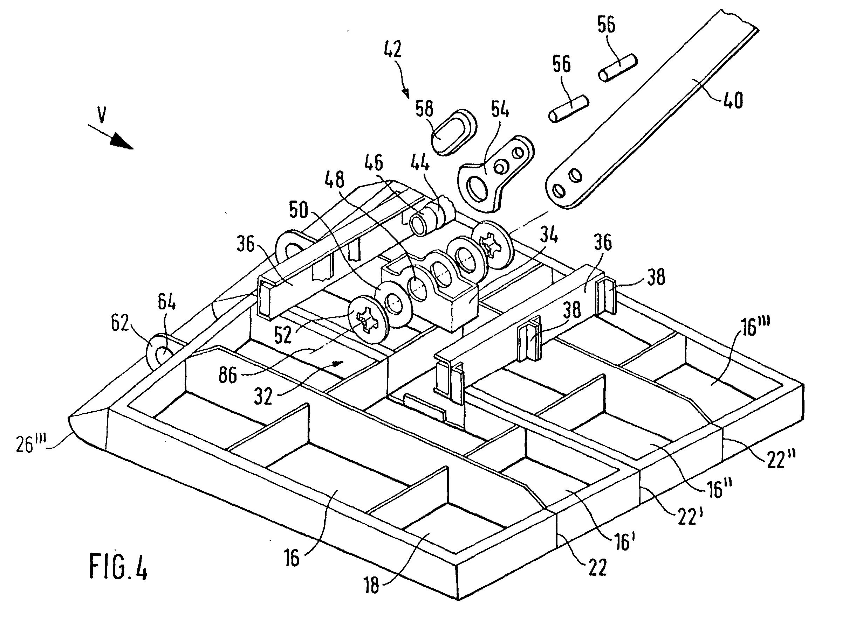

In besonders vorteilhafter Weise sind die mehreren langgestreckten kastenförmigen Segmente 16, 16', 16'', 16''' nebeneinander angeordnet, derart, daß die Fügungen 22, 22', 22'' (vgl. Fig. 4 insbesondere) zwischen den jeweils einander benachbarten Seitenwänden 20, 20'' in einer Richtung verlaufen, die im wesentlichen parallel ist zu einer möglichen Bewegung der thermomechanisch belasteten Bauanordnung 12. Insoweit sind die Fügungen 22, 22', 22'' im wesentlichen parallel zur Bewegungs- bzw. Flugrichtung des Flugkörpers angeordnet. Durch eine solche strömungstechnisch äußerst günstige Anordnung der Fügungen 22, 22', 22'' lassen sich Strömungswiderstände an der bewegbaren Baukomponente 10 insgesamt und damit lokale Überhitzungen, sogenannte hot spots, die in engen, schlecht abstrahlenden Spalten etc. entstehen können, konstruktiv besonders einfach und sicher vermeiden.

Zur weiteren Verbesserung der Strömungsmechanik weisen die Bodenwände 18, 18', 18'', 18''' der kastenförmigen Segmente 16, 16', 16'', 16''' des Grundkörpers 14 eine Fläche 24 auf, die den Seitenwänden 20, 20', 20'',. 20''' abgewandt und entsprechend der Fig. 1 im wesentlichen eben ausgebildet ist.

Der Übergangsbereich 26, 26', 26'', 26''' zwischen der jeweiligen Bodenwand 18, 18', 18'', 18''' und den zugeordneten, zumindest randseitigen Seitenwänden 20, 20', 20'', 20''' ist dabei aus strömungstechnischen Gründen ebenfalls abgerundet. Auch auf diese Weise werden zusätzlich lokale Überhitzungen, sogenannte hot spots, ausgeschlossen.

Eine derartige Abrundung des Übergangsbereiches 26, 26'. 26'', 26''' kann in diesem Zusammenhang durch eine integrale Bauweise bzw. Formgebung des jeweiligen kastenförmigen Segmentes 16, 16', 16'', 16''' erfolgen. Ebenso ist es jedoch denkbar, den jeweiligen Übergangsbereich 26, 26', 26'', 26''' des jeweiligen kastenförmigen Segmentes 16, 16', 16'', 16''' mit separaten, entsprechend geformten Bauelementen (nicht dargestellt) zu versehen. Solche Bauelemente, die etwa winkelförmig ausgestaltet sind, sind innenseitig an die Außenkontur des jeweiligen kastenförmigen Segmentes 16, 16', 16'', 16''' und außenseitig mit Abrundungen beliebiger Größe und/oder Form ausgebildet.

Die kastenförmigen Segmente 16, 16', 16'', 16''' des Grundkörpers 14 sind durch Verstärkungsrippen 28 oder dergleichen ausgesteift. Die Verstärkungsrippen 28 sind dabei jeweils, insbesondere integral, an der Bodenwand 18, 18', 18'', 18''' und den Seitenwänden 20, 20', 20'', 20''' angeformt. Bei der in der Fig. 2 dargestellten Ausführungsform der kastenförmigen Segmente 16, 16', 16'', 16''' sind die Verstärkungsrippen 28 jeweils zwischen den einander gegenüberliegenden Seitenwänden 20 und 20'' angeordnet, d.h. verlaufen im wesentlichen senkrecht bzw. quer zu den Fügungen 22, 22', 22''. Es ist jedoch ebenso denkbar, Verstärkungsrippen 28 alternativ oder sogar kumulativ auch in Längs- und/oder Diagonalrichtung zur weiteren Versteifung des jeweiligen kastenförmigen Segmentes 16, 16', 16'', 16''' und damit des gesamten Grundkörpers 14 anzuordnen.

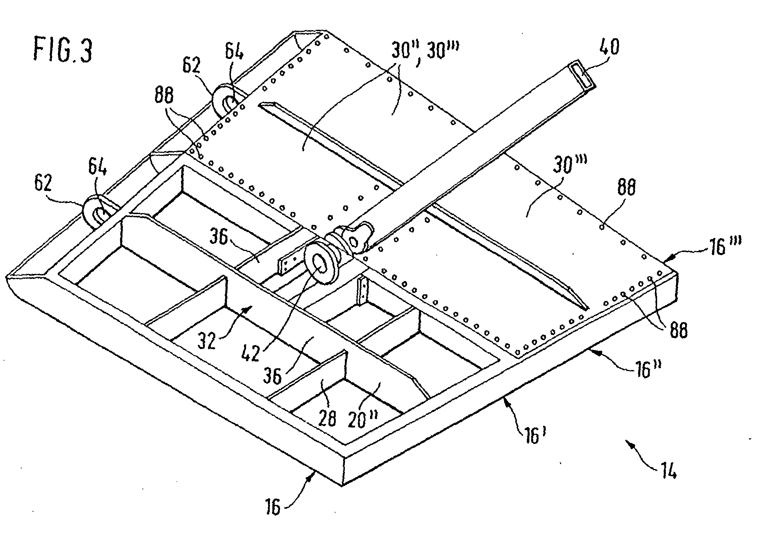

Um den Grundkörper 14 noch zusätzlich auszusteifen, können einzelne, vorzugsweise sämtliche, kastenförmige Segmente 16, 16', 16'', 16''' mit Deckeln 30, 30', 30'', 30''' versehen sein, die jeweils an den Seitenwänden 20, 20', 20'', 20''' eines jeden kastenförmigen Segmentes 16, 16', 16'', 16''' lösbar befestigt sind. In der Fig. 3 sind lediglich die Deckel 30'', 30''', der kastenförmigen Segmente 16'' bzw. 16''' gezeigt.

Entsprechend den Fig. 3 und 4 ist das mindestens eine mittels Gasphaseninfiltrationsverfahren gebildete Bauelement als mechanisch hochbeanspruchtes Kraftübertragungs- und Lagerelement 32 der bewegbaren Baukomponente 10 ausgebildet. Das Kraftübertragungs- und Lagerelement 32 ist an dem Grundkörper 14 der bewegbaren Baukomponente 10 zu deren Bewegung, d.h. bei dem vorliegenden Ausführungsbeispiel zu deren Verschwenkung, angebracht.

Wie insbesondere der Fig. 4 zu entnehmen ist, umfaßt das Kraftübertragungs- und Lagerelement 32 wenigstens einen Längsträger 34 und mindestens einen, vorzugsweise zwei Querträger 36. Der Längsträger 34 und die Querträger 36 sind aneinander und an den Seitenwänden 20, 20'' des wenigstens einen kastenförmigen Segmentes 16, 16', 16'', 16''' des Grundkörpers 14 über beispielsweise Winkel 38 oder dergleichen lösbar befestigbar. Bei der dargestellten Ausführungsform sind der Längsträger 34 und die zwei Querträger 36 etwa mittig von dem Grundkörper 14 aufgenommen und an diesem angebracht. Insoweit erstrecken sich die zwei Querträger 36 im wesentlichen über die zwei benachbarten kastenförmigen Segmente 16' und 16''.

Das Kraftübertragungs- und Lagerelement 32 umfaßt des weiteren mindestens eine Schubstange 40. Die Schubstange 40 überträgt eine Kraft, die in an sich bekannter Weise von einem nicht näher dargestellten (Stell-)Motor erzeugt ist. Diese Kraft wird von der Schubstange 40 über den Längsträger 34 und die zwei Querträger 36 in die Seitenwände 20, 20'' der zwei kastenförmigen Segmente 16' und 16'' eingeleitet und somit auf den Grundkörper 14 der bewegbaren Baukomponente 10 insgesamt übertragen.

Entsprechend den Fig. 3 und insbesondere 4 umfaßt das Kraftübertragungs- und Lagerelement 32 noch zusätzlich ein Lager 42. Das Lager 42 ist zwischen dem Längsträger 34 und den zwei Querträgern 36 einerseits sowie der Schubstange 40 andererseits angeordnet und insbesondere (halb-)kugel-, kalotten-oder dergleichen -förmig ausgebildet. Durch eine solche (halb-) kugel-, kalotten- oder dergleichen -förmige Ausbildung des Lagers 42 lassen sich unerwünscht auftretende Quer- und Torsionskräfte auffangen und somit lokale Verpressungen vermeiden.

Gemäß der Fig. 4 umfaßt das Lager 42 eine (halb-)kugel-, kalotten- oder dergleichen -förmig ausgestaltete Lagerbuchse 44 oder dergleichen Lagerring. Die Lagerbuchse 44 ist über einen Lagerbolzen 46 oder dergleichen Lagerrohr abgestützt, der bzw. das endseitig in Bohrungen 48 des Längsträgers 34 aufgenommen ist. Zur axialen Sicherung des Lagerbolzens 46 mit der Lagerbuchse 44 in dem Längsträger 34 sind jeweils endseitig Zwischenscheiben 50 und Federringe 52 oder sonstige Befestigungselemente, wie zum Beispiel Querstifte, etc. vorgesehen.

Weiterhin umfaßt das in der Fig. 4 gezeigte Lager 42 eine mit der Lagerbuchse 44 zusammenwirkende Lagerbuchsenaufnahmeeinrichtung 54 oder dergleichen Lagerplatte, die endseitig an der Schubstange 40 mittels Verbindungsbolzen 56 und/oder sonstigen Sicherungselementen 58 angebracht ist.

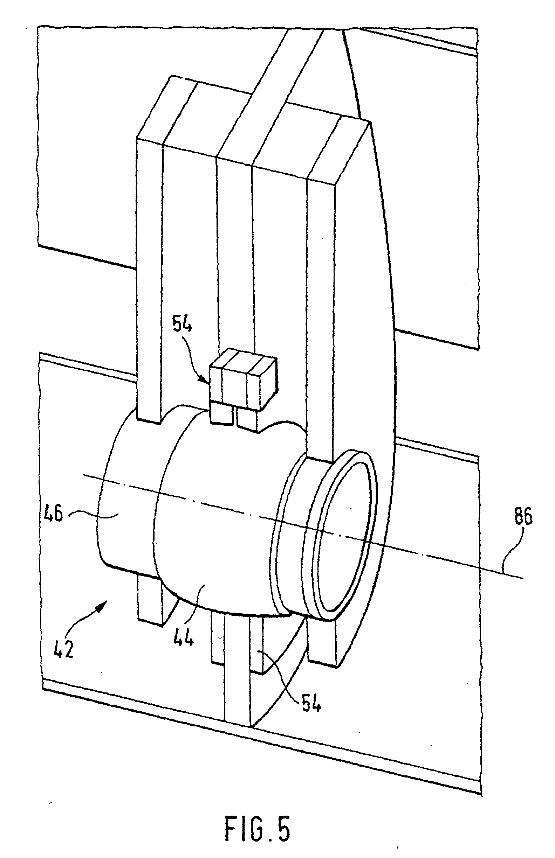

Aus der Fig. 5 ist der besondere konstruktive Aufbau des Lagers 42 vergrößert dargestellt. Durch die (halb-)kugel-, kalotten- oder dergleichen -förmige Ausgestaltung der Lagerbuchse 44, die mit einer daran entsprechend angepaßten Lagerbuchsenaufnahmeeinrichtung 54 zusammenwirkt, lassen sich auftretende Torsions-, Quer- und Kippkräfte zwischen der bewegbaren Baukomponente 10 und dem (Stell-)Motor an der Bauanordnung 12 infolge von Seitenverwindungen des Grundkörpers 14 etc. zuverlässig ausschließen. Damit einhergehend werden lokale Verpressungen und somit zeitweise Blockierungen bzw. dauerhafte Beschädigungen der bewegbaren Baukomponente 10 vermieden, die unter Umständen wiederum zu einer Unbeweglichkeit der Baukomponente 10 führen können.

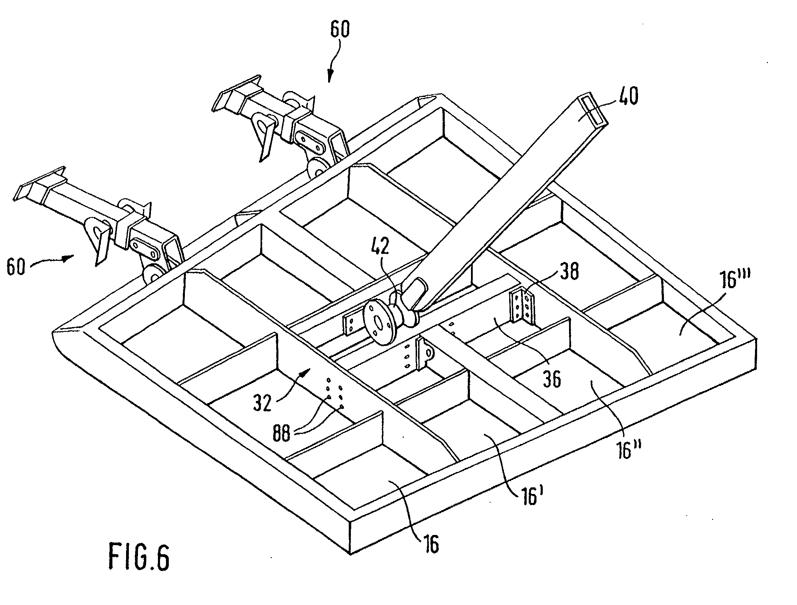

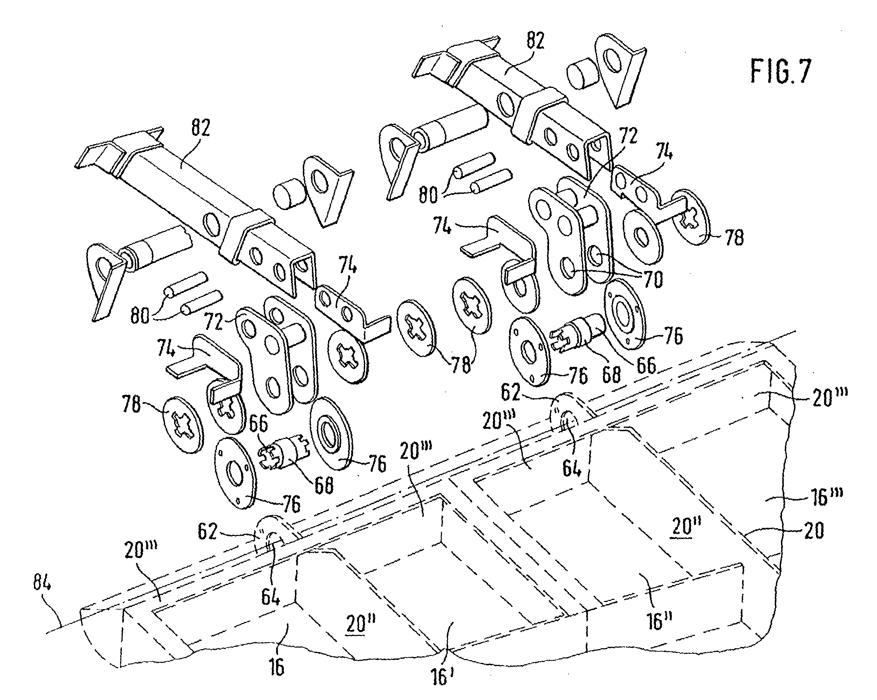

Die in den Fig. 6 und 7 gezeigte Ausführungsform der bewegbaren Baukomponente 10 nach der Erfindung umfaßt darüber hinaus mindestens ein, vorzugsweise zwei, Lagerelemente 60. Bei den Lagerelementen 60 handelt es sich ebenfalls um Bauelemente, die mittels Gasphaseninfiltrationsverfahren gebildet sind. Die Lagerelemente 60 sind vorgesehen, um eine statisch bestimmte Aufhängung und zugleich eine bewegliche Verbindung der bewegbaren Baukomponente 10 mit der Bauanordnung 12 sicherzustellen. Die zwei Lagerelemente 60 sind wenigstens einer der Seitenwände 20''' der kastenförmigen Segmente 16, 16', 16'', 16''' zugeordnet und insbesondere scharnierförmig ausgebildet. Die zwei Lagerelemente 60 sind baugleich. Einander entsprechende, gleiche Bauteile sind infolgedessen jeweils mit identischen Bezugsziffern versehen.

Die Seitenwände 20 der kastenförmigen Segmente 16 und 16'' und/oder die Seitenwände 20'' der kastenförmigen Segmente 16' und 16''' sind dabei jeweils verlängert und im endseitigen Bereich 62 mit Bohrungen 64 versehen. Die Bohrungen 64 dienen jeweils zur Aufnahme eines korrespondierenden Lagerbolzens 66 oder dergleichen Lagerrohres, der bzw. das vorzugsweise ebenfalls mit einer (halb-)kugel-, kalotten- oder dergleichen -förmig ausgestalteten Lagerbuchse 68 oder dergleichen Lagerring entsprechend dem Lager 42 ausgebildet ist. Insoweit ist die Lagerbuchse 68 auf den Lagerbolzen 66 aufgebracht, der endseitig in Bohrungen 70 eines Winkelträgers 72 aufgenommen ist. Der Winkelträger 72 ist aus zwei L-förmigen Platten mit dazwischen angeordneten Abstandshaltern zusammengesetzt. Zur axialen Sicherung des Lagerbolzens 66 mit der Lagerbuchse 68 in dem Winkelträger 72 sind jeweils endseitig Sicherungselemente 74, Zwischenscheiben 76 und Federringe 78 oder sonstige Befestigungselemente, wie zum Beispiel Querstifte, etc. vorgesehen. Der Winkelträger 72 wiederum ist mittels entsprechender Lagerbolzen 80 an einem Verbindungsträger 82 befestigt, der an der Bauanordnung 12 angebracht ist.

Die Bohrungsachsen 84 der Bohrungen 64 sind zueinander bzw. zur Dreh- und Bohrungsachse 86 des Lagers 42 ausgerichtet, mithin sämtlich parallel angeordnet.

Weiterhin sind die Seitenwände 20, 20', 20'', 20''' sämtlich und/oder der Längsträger 34 und/oder die Querträger 36 und/oder die Schubstange 40 zur Versteifung hohlprofiliert ausgebildet.

Die Bauelemente sind, vorzugsweise sämtlich, mittels Verbindungselementen 88, insbesondere Schrauben oder dergleichen, miteinander lösbar verbindbar. Die Verbindungselemente 88 sind dabei vorzugsweise im Bereich der Seitenwände 20, 20', 20'', 20''' der kastenförmigen Segmente 16, 16', 16'', 16''' des Grundkörpers 14 plaziert, so daß Störstellen an der thermisch höchstbelasteten Fläche 24 der Bodenwand 18, 18', 18'', 18''' vermieden und insoweit in weniger beanspruchte Bereiche verlegt sind.

### Ausführungsbeispiel:

Die erfindungsgemäße bewegbare Baukomponente kann als Steuerklappe für rückkehrfähige Raumfahrzeuge bzw. Flugkörper verwendet werden. Dadurch können für die im Zusammenhang mit dem Bau und Betrieb einer Raumstation stehenden Projekte Crew Return Vehicle (CRV) und Crew Transfer Vehicle (CTV) sowie zunächst für den vorangehenden Erprobungsträger X-38 wiederverwendbare Steuerklappen zur Verfügung gestellt werden. Nachfolgend wird deshalb beispielhaft und in nicht beschränkender Weise die Herstellung einer Steuerklappe für den Experimental-raumgleiter X-38 beschrieben.

Eine Steuerklappe für den X-38 besteht aus folgenden CMC-Einzelteilen, die in Abhängigkeit von ihrer Funktion und ihrer Gestalt über das Gradienten-CVI-Verfahren oder das LPI-Verfahren hergestellt werden. Im Beispiel werden kohlenstoffverstärkte Siliciumcarbidkeramiken als Werkstoff verwendet.

Die Teile sind im einzelnen in den Fig. 2, 4 und 7 dargestellt.

Bei der Herstellung der großen kastenförmigen Segmente 16, 16', 16'', 16''' für den Grundkörper 14 werden auf Maß geschnittene Kohlenstoffasergewebe, deren Fasern mit einer Pyrokohlenstoffschicht versehen wurden, über Positivformen im Naßlaminierverfahren unter Anwendung von Polycarbonsilanharz abgelegt. Der Schnitt- und Ablegeplan für Gewebelagen war dazu so gestaltet, daß die Verstärkungs- bzw. Versteifungsrippen 28 in den kastenförmigen Segmenten 16, 16', 16'', 16''' integral, d.h. mit durchlaufenden Endlosfasern an die Außenflächen der kastenförmigen Segmente 16, 16', 16'', 16''', also an die Bodenwand 18 und Seitenwände 20, 20', 20'', 20''', angebunden sind. Auch die Deckel 30, 30', 30'', 30''', die an die Größe eines kastenförmigen Segmentes 16, 16', 16'', 16''' angepaßt sind, werden im Naßlaminierverfahren hergestellt.

Die abgelegten kastenförmigen Segmente 16, 16', 16'', 16''' werden im Autoklaven bei 200°C unter 5 bar Druck ausgehärtet, während die Deckel 30, 30', 30'', 30''' in der Heißpresse bei gleichen Bedingungen aushärten.

Die so gewonnenen Grünkörper, welche die Charakteristik von Kunststoffverbund-Bauteilen aufweisen, werden in einem Hochtemperaturofen unter Inertgasatmosphäre einer Pyrolysebehandlung unterzogen. Bei einer Temperatur von 1200°C wird hierbei das ausgehärtete Polycarbosilanharz unter Abspaltung von hauptsächlich Methan, Wasserstoff und Aromaten unter Bildung eines Feststoffs aus amorphem Siliciumcarbid (SiC), das durch die Verarbeitung des Ausgangsharzes an Luft etwas Sauerstoff enthält, zersetzt. Der gebildete SiC-Feststoff umschließt die Fasern als Matrixmaterial eines keramischen Faserverbundwerkstoffes.

Die thermische Harzzersetzung ist regelmäßig begleitet von einem Masse- und Volumenschwund, der sich in der Entstehung von Rissen und Poren im Feststoffrückstand auswirkt. Zum Ausgleich des Schwundes werden je nach Bedarf etwa fünf Nachinfiltrationszyklen mit dem Polycarbosilanharz mit jeweils anschließenden Aushärtungen und Pyrolysebehandlungen durchgeführt. Durch diese Verfahrensweise erhält man Bauteile mit einem Fasergehalt von etwa 43 Vol% und etwa 12 Vol% Restporosität.

Anschließend werden die Paßflächen für die Aneinanderfügung der Kästen bzw. kastenförmigen Segmente 16, 16', 16'', 16''' und die Anbringung der Deckel 30, 30', 30'', 30''' durch Schleifen bearbeitet und die Bohrungen für Schraubverbindungen gesetzt, wobei in beiden Fällen Diamantwerkzeuge zum Einsatz kommen. Die Einzelteile werden danach mittels chemischer Gasphasenabscheidung mit 0,1 mm bis 0,2 mm dickem SiC beschichtet, wobei die Schichtdicke durch entsprechendes Übermaß der Bohrungen und Untermaß der Schraubbolzen 88 berücksichtigt wird.

Für die Verbindung der Teile werden Schraubbolzen 88 mit einem Schaftdurchmesser von etwa 6 mm und Muttern mit entsprechendem Innendurchmesser verwendet, die gemäß der deutschen Patentschrift P 43 37 043 aus C/SiC-Platten gefertigt sind, welche im Gradienten-CVI-Verfahren hergestellt werden.

Die Bauteile für die Schubstange 40, die Längs- und Querträger 34, 36 für die Anbindung an die Heckstruktur des Flugkörpers, die Scharniere 60 und das Lager 42 werden über das Gradienten-CVI-Verfahren hergestellt.

Hierfür werden im Gewebewickelverfahren rohrförmige Faservorformlinge mit leichten Übermaßen in bezug auf die im Fertigbauteil benötigten Endmaße hergestellt, wobei zur Bindung der Gewebelagen und zu ihrer Fixierung im gewünschten und geeigneten Abstand ein geeigneter Klebstoff auf das Gewebe aufgebracht wird. Durch eine Pyrolysebehandlung bei 1000 °C baut sich der Klebstoff zu Kohlenstoff ab, der im nachfolgenden CVI-Prozeßschritt die Form- und Maßhaltigkeit der Faservorformlinge bewirkt.

Für die kastenförmigen Segmente 16, 16', 16'', 16''', die Schubstange 40 und die Teile zur Anbindung an die Heckstruktur des Flugkörpers werden Vierkantrohre als Vorformlinge verwendet und für die Lager und Scharniere selbst solche mit kreisförmigem Querschnitt.

Die in Halteflansche eingesetzten Faservorformlinge werden in den Reaktor einer Gradienten-CVI-Anlage so eingebaut, daß der Prozeßgasstrom (hier Methyltrichlorsilan[CH₃SiCl₃]/Wasserstoff-[H₂]) in den Rohrinnenraum geleitet wird und aufgrund einer Abdichtung am Flansch durch die Faserwand hindurchströmen muß. Dies bedingt einen Druckgradienten über die Faserwand. Der Reaktorraum wird auf gleichförmige Temperatur von 1150 °C beheizt, so daß die Außenseiten der Faservorformlinge sich ebenfalls auf dieser Temperatur befindet. Die Rohrinnenseiten werden dagegen durch eine eingesetzte Wasserkühlung auf niedrigerer Temperatur gehalten (zum Beginn des Prozesses ca. 700 °C), d.h. es wird ein definierter Temperaturgradient eingestellt. Dieser Temperaturgradient bewirkt, daß das von der Rohrinnenseite her zugeführte Prozeßgas in die Faserstruktur eindringt, ohne daß eine Abscheidung von Siliciumcarbid (SiC) erfolgt, weil die Temperatur für diesen thermisch induzierten Vorgang nicht ausreicht. Erst in der auf der höheren Temperatur befindlichen äußeren Rohrzone findet die Abscheidung von SiC auf den Fasern statt. Durch die Füllung der Porenräume mit SiC steigt die Wärmeleitfähigkeit, wodurch im Verlauf der Infiltration die die SiC-Abscheidung hervorrufende Temperatur die gesamte Wanddicke des Faserkörpers durchzieht und so eine vollständige Matrixinfiltration erreicht wird. Der Vorteil dieser Verfahrensweise besteht in der relativ kurzen Prozeßdauer, da durch die Zwangsdurchströmung der Faserstruktur ein Prozeßgasdruck in der Größenordnung des Atmosphärendrucks und eine hohe Prozeßtemperatur angewandt werden können, ohne daß es zu einem frühzeitigen Verschließen der vom Prozeßgas angeströmten Oberfläche kommt.

Aus den so erzeugten rohrförmigen C/SiC-Halbzeugen werden die Lager- und Scharnierteile 42, 60 sowie die Lagerkästen 16, 16', 16'', 16''', Schubstange 40 und Träger 34, 36 auf Grobmaß herausgetrennt. Diese Rohrteile werden durch Schleifen unter Abzug der Schichtdicke für die CVD-SiC-Schicht auf Maß bearbeitet. Danach werden die Teile im CVD-Verfahren mit 0,15 mm SiC beschichtet und als Endbearbeitung poliert.

Als letzter Arbeitsschritt erfolgt die Endmontage der Teile auf einer Richtbank, wobei auf die Schraubbolzen 88 eine definierte Vorspannung von 3 kN aufgebracht wird.

Die fertige Steuerklappe hat beispielsweise eine Gesamtlänge von 1,6 m und eine Gesamtbreite von 1,5 m. Sie ist um ca. 40 % leichter als eine herkömmliche, ebenso große Steuerklappe, die aus einer Superlegierung und Isolationskacheln hergestellt wurde.

Die bewegbare Baukomponente gemäß der Erfindung ist nicht auf die dargestellte Ausführungsform beschränkt. So ist es ebenfalls denkbar, beispielsweise anstelle des einen Kraftübertragungs- und Lagerelementes 32 und der zwei Lagerelemente 60 zwei solcher Kraftübertragungs- und Lagerelemente 32 und nur ein derartiges Lagerelement 60 vorzusehen, um eine statisch bestimmte Aufhängung entsprechend dem vorstehenden Ausführungsbeispiel zu erhalten. Dabei wäre es gleichzeitig möglich, die zwei Kraftübertragungs- und Lagerelemente 32 aus dem etwa mittigen Bereich des Grundkörpers 14 in dessen Eckbereiche und das Lagerelement 60 etwa in die Mitte der Seitenwände 20''' der kastenförmigen Segmente 16, 16', 16'', 16''' des Grundkörpers 14 zu verlegen.

Darüber hinaus ist es ohne weiteres möglich, eine kinematische Umkehr bezüglich der Anordnung des Lagerbolzens 46 mit der Lagerbuchse 44 sowie der Lagerbuchsenaufnahmeeinrichtung 54 des Lagers 42 bzw. von Lagerbolzen 66 mit Lagerbuchse 68 und der Bohrungen 64 des Lagerelementes 60 vorzunehmen. Dies hätte dann zur Folge, daß das Lager 42 vergleichbar zu den beiden Lagerelementen 60 ausgebildet ist, und umgekehrt.

Schließlich ist es auch noch denkbar, daß einzelne Bauteile der Baukomponente 10 und/oder der Bauanordnung 12 in alternativer oder kumulativer Ausgestaltung zumindest teilweise aus Metall, einer Metallegierung oder ähnlichem, wie beispielsweise die Längsträger 34 und die zwei Querträger 36, bestehen.

### Bezugszeichenliste

- 10: Bewegbare Baukomponente
- 12: thermomechanisch belastete Bauanordnung
- 14: Grundkörper
- 16, 16', 16", 16''': kastenförmige Segmente
- 18, 18', 18'', 18''': Bodenwände
- 20, 20', 20'', 20''': Seitenwände
- 22, 22', 22'': Fügungen
- 24: Fläche
- 26, 26', 26'', 26''': Übergangsbereiche
- 28: Verstärkungsrippen
- 30, 30', 30'', 30''': Deckel
- 32: Kraftübertragungs- und/oder Lagerelement
- 34: Längsträger
- 36: Querträger
- 38: Winkel
- 40: Schubstange
- 42: Lager
- 44: Lagerbuchse
- 46: Lagerbolzen
- 48: Bohrungen
- 50: Zwischenscheiben
- 52: Federringe
- 54: Lagerbuchsenaufnahmeeinrichtung
- 56: Verbindungsbolzen
- 58: Sicherungselemente
- 60: Lagerelemente (Scharniere)
- 62: endseitiger Bereich der Seitenwände
- 64: Bohrungen
- 66: Lagerbolzen
- 68: Lagerbuchse
- 70: Bohrungen
- 72: Winkelträger
- 74: Sicherungselemente
- 76: Zwischenscheiben
- 78: Federringe
- 80: Lagerbolzen
- 82: Verbindungsträger
- 84: Bohrungsachsen
- 86: Dreh- und Bohrungsachse
- 88: Verbindungselemente.

## Patentansprüche

1. Bewegbare Baukomponente für eine thermomechanisch belastete Bauanordnung (12) wenigstens teilweise aus faserverstärkter Keramik, wobei die bewegbare Baukomponente (10) wenigstens ein mittels Polymerinfiltrations- und Pyrolyseverfahren gebildetes Bauelement und mindestens ein mittels Gasphaseninfiltrationsverfahren gebildetes Bauelement umfaßt.

2. Baukomponente nach Anspruch 1, **dadurch gekennzeichnet**, daß das wenigstens eine mittels Polymerinfiltrations- und Pyrolyseverfahren gebildete Bauelement als Grundkörper (14) der bewegbaren Baukomponente (10) ausgebildet ist.

3. Baukomponente nach Anspruch 2, **dadurch gekennzeichnet**, daß der Grundkörper (14) aus wenigstens einem kastenförmigen Segment (16, 16', 16'', 16''') mit einer Bodenwand (18, 18', 18'', 18''') und daran integral angeformten Seitenwänden (20, 20', 20'', 20''') besteht.

4. Baukomponente nach Anspruch 3, **dadurch gekennzeichnet**, daß die Bodenwand (18, 18', 18'', 18''') des wenigstens einen kastenförmigen Segmentes (16, 16', 16'', 16''') eine den Seitenwänden (20, 20', 20'', 20''') abgewandte, im wesentlichen ebene Fläche (24) aufweist.

5. Baukomponente nach Anspruch 3 oder 4, **dadurch gekennzeichnet**, daß der Übergangsbereich (26, 26', 26'', 26''') zwischen der Bodenwand (18, 18', 18'', 18''') und den Seitenwänden (20, 20', 20'', 20''') abgerundet ist.

6. Baukomponente nach einem der Ansprüche 3 bis 5, **dadurch gekennzeichnet**, daß das wenigstens eine kastenförmige Segment (16, 16', 16'', 16''') des Grundkörpers (14) durch, insbesondere integral, an der Bodenwand (18, 18', 18'', 18''') und den Seitenwänden (20, 20', 20'', 20''') angeformte Verstärkungsrippen (28) oder dergleichen ausgesteift ist.

7. Baukomponente nach einem der Ansprüche 3 bis 6, **dadurch gekennzeichnet**, daß das wenigstens eine kastenförmige Segment (16, 16', 16'', 16''') des Grundkörpers (14) durch einen an den Seitenwänden (20, 20', 20'', 20''') lösbar befestigbaren Deckel (30, 30', 30", 30''') oder dergleichen ausgesteift ist.

8. Baukomponente nach einem der Ansprüche 3 bis 7, **dadurch gekennzeichnet**, daß der Grundkörper (14) aus mehreren kastenförmigen Segmenten (16, 16', 16'', 16''') zusammengesetzt ist, die über jeweils einander benachbarte Seitenwände (20, 20'') miteinander verbindbar sind.

9. Baukomponente nach Anspruch 8, **dadurch gekennzeichnet**, daß die mehreren kastenförmigen Segmente (16, 16', 16'', 16''') nebeneinander angeordnet sind, derart, daß die Fügungen (22, 22', 22'') zwischen den jeweils einander benachbarten Seitenwänden (20, 20'') in einer Richtung im wesentlichen parallel zu einer möglichen Bewegung der thermomechanisch belasteten Bauanordnung (12) verlaufen.

10. Baukomponente nach einem der Ansprüche 1 bis 9, **dadurch gekennzeichnet**, daß das mindestens eine mittels Gasphaseninfiltrationsverfahren gebildete Bauelement als Kraftübertragungs- und/oder Lagerelement (32, 60) der bewegbaren Baukomponente (10) ausgebildet ist.

11. Baukomponente nach Anspruch 10, **dadurch gekennzeichnet**, daß das Kraftübertragungs- und/oder Lagerelement (32, 60) an dem Grundkörper (14) der bewegbaren Baukomponente (10) zu deren Bewegung angebracht ist.

12. Baukomponente nach Anspruch 10 oder 11, **dadurch gekennzeichnet**, daß das Kraftübertragungs- und/oder Lagerelement (32) wenigstens einen Längsträger (34) und mindestens einen, vorzugsweise zwei, Querträger (36) umfaßt, die aneinander und an den Seitenwänden (20, 20'') des wenigstens einen kastenförmigen Segmentes (16, 16', 16'', 16''') des Grundkörpers (14) lösbar befestigbar sind.

13. Baukomponente nach Anspruch 12, **dadurch gekennzeichnet**, daß der wenigstens eine Längsträger (34) und der mindestens eine, vorzugsweise die zwei, Querträger (36) etwa mittig von dem Grundkörper (14) aufgenommen und an diesem angebracht sind.

14. Baukomponente nach einem der Ansprüche 10 bis 13, **dadurch gekennzeichnet**, daß das Kraftübertragungs- und Lagerelement (32) mindestens eine Schubstange (40) oder dergleichen umfaßt, die eine von einem Motor erzeugte Kraft über den wenigstens einen Längsträger (34) und den mindestens einen, vorzugsweise die zwei, Querträger (36) auf den Grundkörper (14) der bewegbaren Baukomponente (10) überträgt.

15. Baukomponente nach einem der Ansprüche 10 bis 14, **dadurch gekennzeichnet**, daß das Kraftübertragungs- und Lagerelement (32) ein Lager (42) umfaßt, das zwischen dem wenigstens einen Längsträger (34) und dem mindestens einen, vorzugsweise den zwei, Querträgern (36) sowie der mindestens einen Schubstange (40) angeordnet und insbesondere (halb-)kugel-, kalotten- oder dergleichen -förmig ausgebildet ist.

16. Baukomponente nach Anspruch 15, **dadurch gekennzeichnet**, daß das Lager (42) eine (halb-)kugel-, kalotten- oder dergleichen -förmig ausgestaltete Lagerbuchse (44), die über einen Lagerbolzen (46) oder dergleichen an dem wenigstens einen Längsträger (34) abgestützt ist, und eine mit der Lagerbuchse (44) zusammenwirkende Lagerbuchsenaufnahmeeinrichtung (54), die endseitig an der Schubstange (40) angebracht ist, umfaßt.

17. Baukomponente nach einem der Ansprüche 10 bis 16, **dadurch gekennzeichnet**, daß mindestens ein, vorzugsweise zwei, weitere Lagerelemente (60) zur beweglichen Verbindung der bewegbaren Baukomponente (10) mit der Bauanordnung (12) an wenigstens einer der Seitenwände (20, 20', 20'', 20''') des wenigstens einen kastenförmigen Segmentes (16, 16', 16'', 16''') angeordnet ist/sind, das/die insbesondere scharnierförmig ausgebildet ist/sind.

18. Baukomponente nach Anspruch 17, **dadurch gekennzeichnet**, daß wenigstens eine, vorzugsweise zwei, der Seitenwände (20, 20'') verlängert und im endseitigen Bereich (62) mit Bohrungen (64) zur Aufnahme von korrespondierenden Lagerbolzen (66) oder dergleichen der Bauanordnung (12) versehen sind, deren Bohrungsachse (84) zueinander bzw. zur Drehachse (86) des einen Lagers (42) ausgerichtet ist/sind.

19. Baukomponente nach einem der Ansprüche 3 bis 18, **dadurch gekennzeichnet**, daß die Seitenwände (20, 20', 20'', 20''') und/oder Längsträger (34) und/oder Querträger (36) und/oder Schubstange (40) hohlprofiliert ausgebildet ist/sind.

20. Baukomponente nach einem der Ansprüche 1 bis 19, **dadurch gekennzeichnet**, daß die Bauelemente mittels Gasphaseninfiltrationsverfahren gebildeter Verbindungselemente (88), insbesondere Schrauben oder dergleichen, miteinander lösbar verbindbar sind, die insbesondere im Bereich der Seitenwände (20, 20', 20'', 20''') des Grundkörpers (14) angeordnet sind.

21. Baukomponente nach einem der Ansprüche 1 bis 20, **dadurch gekennzeichnet**, daß die Bauelemente zum Schutz der Keramik vor Oxidation mit einer Schutzschicht versehen sind.

22. Verwendung einer bewegbaren Baukomponente für eine thermomechanisch belastete Bauanordnung nach einem der Ansprüche 1 bis 21, wobei die bewegbare Baukomponente (10) als bewegbare Steuerklappe oder dergleichen eines Flugkörpers ausgebildet ist.

23. Verfahren zur Herstellung einer bewegbaren Baukomponente (10) für eine thermomechanisch belastete Bauanordnung (12) nach einem der Ansprüche 1 bis 22, wobei
- wenigstens ein Bauelement im Polymerinfiltrations- und Pyrolyseverfahren gebildet wird,
- mindestens ein Bauelement im Gasphaseninfiltrationsverfahren gebildet wird und
- die Bauelemente zu der Baukomponente (10) zusammengefügt werden.

24. Verfahren nach Anspruch 23, **dadurch gekennzeichnet**, daß die Bauelemente mittels im Gasphaseninfiltrationsverfahren erzeugter Verbindungselemente (88) zusammengefügt werden.

25. Verfahren nach Anspruch 23 zur Erzeugung des wenigstens einen im Polymerinfiltrations- und Pyrolyseverfahren gebildeten Bauelementes, wobei man
- Gewebezuschnitte aus thermisch hochbelastbaren Fasern auf Positivformen oder in Formgesenken ablegt,
- die Gewebezuschnitte mit einem der Faser entsprechenden organischen Polymerharz tränkt,
- bei erhöhter Temperatur und erhöhtem Druck aushärten läßt und
- den so gebildeten Grünkörper einer Pyrolysebehandlung bei ca. 900° bis 1600°C zur Erzeugung einer faserverstärkten Matrix unterwirft.

26. Verfahren nach Anspruch 25, **dadurch gekennzeichnet**, daß man das Aushärten bei etwa 200°C und etwa 5 bar und die Pyrolysebehandlung bei etwa 1200°C durchführt.

27. Verfahren nach Anspruch 25 und/oder 26, **dadurch gekennzeichnet**, daß man das Bauelement wenigstens teilweise mit wenigstens einer mittels Chemischer Gasphasenabscheidung erzeugten Schutzschicht versieht.

28. Verfahren nach einem der Ansprüche 23 bis 27 zur Erzeugung des mindestens einen im Gasphaseninfiltrationsverfahren gebildeten Bauelementes, wobei man
- eine Gewebebahn aus thermisch hochbelastbaren Fasern wenigstens teilweise und im Abstand mit einem Klebstoff versieht,
- die Gewebebahn zu einem im wesentlichen rohrförmigen Faservorformling mit geeigneten Durchmesser aufwickelt,
- den Faservorformling in einen Gasphaseninfiltrationsreaktor einsetzt und
- unter Einwirkung eines Methyltrichlorsilan/Wasserstoff-Prozeßgases einer Gradienten-Gasphaseninfiltration unterwirft.

29. Verfahren nach Anspruch 28, **dadurch gekennzeichnet**, daß man zu Beginn des Verfahrens einen Temperaturgradienten zwischen etwa 700°C im Inneren des rohrförmigen Faservorformlings und etwa 1150°C im Reaktorraum einstellt.

30. Verfahren nach einem der Ansprüche 23 bis 29, **dadurch gekennzeichnet**, daß man die thermisch hochbelastbaren Fasern aus der Gruppe der Kohlenstoff-, Siliciumcarbid-, Aluminiumoxid-, Mullit- und/oder Polyborosilazanfasern auswählt.

## Claims

1. A moveable structural component for a thermomechanically stressed assembly (12) at least partly of fiber reinforced ceramic, wherein the moveable structural component comprises at least one structural element made by a polymer infiltration and pyrolysis process and at least one structural element made by a chemical vapor infiltration process.

2. The structural component of claim 1, **characterized in that** the at least one structural element made by polymer infiltration and pyrolysis process is embodied as a base (14) of the moveable structural component (10).

3. The structural component of claim 2, **characterized in that** the base (14) consists of at least one box-type segment (16, 16', 16'', 16''') having a bottom wall (18, 18', 18'', 18''') and side walls (20, 20', 20'', 20''') integrally formed thereon.

4. The structural component of claim 3, **characterized in that** the bottom wall (18, 18', 18'', 18''') of the at least one box-type segment (16, 16', 16'', 16''') has an essentially plane surface (24) opposite the side walls (20, 20', 20'', 20''').

5. The structural component of claims 3 or 4, **characterized in that** the transition region (26, 26', 26'', 26''') between the bottom wall (18, 18', 18'', 18''') and the side walls (20, 20', 20'', 20''') is chamfered.

6. The structural component of one of claims 3 to 5 **characterized in that** the at least one box-type segment (16, 16', 16'', 16''') of the base (14) is stiffened by reinforcement ribs (28) particularly integrally formed on the bottom wall (18, 18', 18'', 18''') and the side walls (20, 20', 20'', 20''').

7. The structural component of one of claims 3 to 6, **characterized in that** the at least one box-type segment (16, 16', 16'', 16''') of the base (14) is stiffened by a cover (30, 30', 30'', 30''') or the like, detachably mounted on the side walls (20, 20', 20'', 20''').

8. The structural component of one of claims 3 to 7, **characterized in that** the base (14) consists of several box-type segments (16, 16', 16'', 16'''), which are connectable by respectively adjacent side walls (20, 20'').

9. The structural component of claim 8, **characterized in that** the several box-type segments (16, 16', 16'', 16''') are arranged side by side such that the joints (22, 22', 22") between the respectively adjacent side walls (20, 20'') extend in a direction essentially parallel to a possible movement of the thermomechanically stressed assembly (12).

10. The structural component of one of claims 1 to 9, **characterized in that** the at least one structural element formed by the chemical vapor infiltration process is embodied as a load transmission and/or bearing element (32, 60) of the moveable structural component (10).

11. The structural component of claim 10, **characterized in that** the load transmission and/or bearing element (32, 60) is arranged on the base (14) of the moveable structural component (10) for its movement.

12. The structural component of claim 10 or 11, **characterized in that** the load transmission and/or bearing element (32) comprises at least one longitudinal beam (34) and at least one preferably two, transversal beams, which are detachably mountable to each other and to the side walls (20, 20'') of the at least one box-type segment (16, 16', 16'', 16''') of the base (14).

13. The structural component of claim 12, **characterized in that** the at least one longitudinal beam (34) and the at least one, preferably 2, transversal beam (36) are about centrally received by and arranged on the base (14).

14. The structural component of one of claims 10 to 13, **characterized in that** the load transmission and bearing element (32) comprises at least one rod (4) or the like which transfers the force produced by a motor via the at least one longitudinal beam (34) and the at least one, preferably the two transversal beams (36) onto the base (14) of the moveable structural component (10).

15. The structural component of one of claims 10 to 14, **characterized in that** the load transmission and bearing element (32) comprises a bearing (42), arranged between the at least one longitudinal beam (34) as well as the at least one rod (40) and is particularly semi-spherical, spherical, dome or the like shaped.

16. The structural component of claim 15, **characterized in that** the bearing (42) comprises a semi-spherical, spherical, dome or the like shaped bearing shell (44) which is supported by a bearing pin (46) or the like on the at least one longitudinal beam (34) and a bearing shell receiving device (54) cooperating with the bearing shell (44) which is arranged at the end side of the rod (40).

17. The structural component of one of claims 10 to 16, **characterized in that** the at least one, preferably two bearing elements (60) for moveably connecting the moveable structural component (10) with the assembly (12) is arranged on at least one of the side walls (20, 20', 20'', 20''') of the at least one box-type segment (16, 16', 16'', 16''') which is/are formed like a hinge.

18. The structural component of claim 17, **characterized in that** at least one, preferably two of the side walls (20, 20'') are elongated and at the end side portion (62) provided with bores (64) for receiving corresponding bearing bolts (66) or the like of the assembly (12), the boring axis (84) of which are oriented to each other or to the rotation axis (86) or the one bearing (42), respectively.

19. The structural component of one of claims 3 to 18, **characterized in that** the side (20, 20', 20'', 20''') and/or longitudinal beam (34) and/or transversal beam (36) and/or rod (40) is/are hollow profiled.

20. The structural component of one of claims 1 to 19, **characterized in that** the structural elements of connecting elements (88) made by chemical vapor infiltration process, particularly screws or the like, are detachably connectable with each other, which are arranged particularly in the portion of the side walls (20, 20', 20'', 20''') of the base (14).

21. The structural component of one of claims 1 to 20, **characterized in that** the structural elements are provided with a protective layer for protecting the ceramic from oxidation.

22. The moveable structural component for a thermomechanically stressed assembly of one of claims 1 to 21; wherein the moveable structural component (10) is embodied as a moveable control flap or the like of an aerodyne.

23. A process for producing a moveable structural component (10) for a thermomechanically stressed assembly (12) of one of claims 1 to 22, wherein
- at least one structural element is formed by a polymer infiltration and pyrolysis process,
- at least one structural element is formed by a chemical vapor infiltration process and
- the structural elements are joined to the structural component (10).

24. The process of claim 23, **characterized in that** the structural elements are joined by connecting elements (88) produced by a chemical vapor infiltration process.

25. The process of claim 23 for producing the at least one structural element made by polymer infiltration and pyrolysis process, wherein
- tailored fabrics from thermally highly stressable fibers are let onto positive moulds or into forging dies,
- the tailored fabrics are impregnated with a fiber corresponding organic polymer resin,
- are cured at increased temperature and pressure and
- the so formed green compact is subjected to a pyrolysis treatment at about 900°C to 1.600°C for producing a fiber reinforced matrix.

26. The process of claim 25, **characterized in that** the curing step is carried out at about 200°C and about 5 bar and the pyrolysis treatment at about 1.200°C.

27. The process of claim 25 and/or 26 **characterized in that** the structural element is at least partly provided with at least one protective layer made by chemical vapor deposition.

28. The process of one of claims 23 to 27 for producing the at least one structural element made by the chemical vapor infiltration process, wherein
- a fabric layer of thermally highly stressable fibers is provided at least partly and in a distance with an adhesive,
- the fabric layer is wound to an essentially tube shaped fiber preform of suitable diameter,
- the fiber preform is inserted into a chemical vapor infiltration reactor and is subjected to a gradient chemical vapor infiltration under the action of a methyltrichlorsilane/hydrogen process gas.

29. The process of claim 28, **characterized in that** at the beginning of the process a temperature gradient between about 700°C inside the tube shaped fiber preform and about 1.150°C in the reactor space is adjusted.

30. The process of one of claims 23 to 29, **characterized in that** the thermally highly stressable fibers are chosen from the group consisting of carbon, silicon carbide, aluminum oxide, mullite and/or polyborosilazane fibers.

## Revendications

1. Composant structurel mobile pour un agencement structurel (12) à contraintes thermomécaniques au moins partiellement en céramique renforcée de fibres, le composant structurel mobile (10) comprenant au moins un élément structurel formé au moyen de procédés d'infiltration de polymère et de pyrolyse et au moins un élément structurel formé au moyen d'un procédé d'infiltration en phase gazeuse.

2. Composant structurel selon la revendication 1, **caractérisé en ce qu**'au moins un élément structurel formé au moyen de procédés d'infiltration de polymère et de pyrolyse est conformé en corps de base (14) du composant structurel mobile (10).

3. Composant structurel selon la revendication 2, **caractérisé en ce que** le corps de base (14) est constitué d'au moins un segment en caisson (16, 16', 16'', 16''') avec une paroi de fond (18, 18', 18'', 18''') et avec des parois latérales (20, 20', 20'', 20''') surmoulées d'un seul tenant avec elle.

4. Composant structurel selon la revendication 3, **caractérisé en ce que** la paroi de fond (18, 18', 18'', 18''') dudit au moins un segment en caisson (16, 16', 16'', 16''') présente, à l'opposé des parois latérales (20, 20', 20'', 20'''), une face (24) sensiblement plane.

5. Composant structurel selon la revendication 3 ou 4, **caractérisé en ce que** la zone de transition (26, 26', 26'', 26''') entre la paroi de fond (18, 18', 18'', 18''') et les parois latérales (20, 20', 20'', 20''') est arrondie.

6. Composant structurel selon l'une des revendications 3 à 5, **caractérisé en ce que** ledit au moins un segment en caisson (16, 16', 16'', 16''') du corps de base (14) est rigidifié par des nervures de renfort (28) ou analogues surmoulées sur la paroi de fond (18, 18', 18'', 18''') et sur les parois latérales (20, 20', 20'', 20'''), en particulier d'un seul tenant avec elles.

7. Composant structurel selon l'une des revendications 3 à 6, **caractérisé en ce que** ledit au moins un segment en caisson (16, 16', 16'', 16''') du corps de base (14) est rigidifié par un couvercle (30, 30', 30'', 30''') ou analogue fixé de façon amovible aux parois latérales (20, 20', 20'', 20''').

8. Composant structurel selon l'une des revendications 3 à 7, **caractérisé en ce que** le corps de base (14) est composé de plusieurs segments en caisson (16, 16', 16'', 16''') qui peuvent être reliés entre eux par des parois latérales voisines (20, 20!').

9. Composant structurel selon la revendication 8, **caractérisé en ce que** la pluralité de segments en caisson (16, 16', 16", 16''') sont disposés côte à côte, de façon que les joints (22, 22', 22'') entre les parois latérales voisines (20, 20'') s'étendent dans une direction sensiblement parallèle à un déplacement possible de l'agencement structurel (12) à contraintes thermomécaniques.

10. Composant structurel selon l'une des revendications 1 à 9, **caractérisé en ce que** ledit au moins un élément structurel formé au moyen d'un procédé d'infiltration en phase gazeuse est conformé en élément de transmission de force et/ou de supporte (32, 60) du composant structurel mobile (10).

11. Composant structurel selon la revendication 10, **caractérisé en ce que** l'élément de transmission de force et/ou de support (32, 60) est monté sur le corps de base (14) du composant structurel mobile (10) pour le déplacement de ce dernier.

12. Composant structurel selon la revendication 10 ou 11, **caractérisé en ce que** l'élément de transmission de force et/ou de support (32) comprend au moins un longeron (34) et au moins une, de préférence deux traverses (36) qui peuvent être fixés de façon amovible les uns aux autres et aux parois latérales (20, 20'') dudit au moins un segment en caisson (16, 16', 16'', 16''') du corps de base (14).

13. Composant structurel selon la revendication 12, **caractérisé en ce que** ledit au moins un longeron (34) et ladite traverse (36) au nombre d'au moins une, de préférence de deux, sont logés sensiblement au centre du corps de base (14) et sont montés sur celui-ci.

14. Composant structurel selon l'une des revendications 10 à 13, **caractérisé en ce que** l'élément de transmission de force et de support (32) comprend au moins une barre de poussée (40) ou analogue qui, par l'intermédiaire du longeron (34) au nombre d'au moins un et de la traverse (36) au nombre d'au moins une, de préférence de deux, transmet au corps de base (14) du composant structurel mobile (10) une force générée par un moteur.

15. Composant structurel selon l'une des revendications 10 à 14, **caractérisé en ce que** l'élément de transmission de force et de support (32) comprend un palier (42) qui est disposé entre le longeron (34) au nombre d'au moins un et les traverses (36) au nombre d'au moins une, de préférence de deux, ainsi que la barre de poussée (40) au nombre d'au moins une et qui est conformé en particulier en (hémi-)sphère, en calotte ou analogue.

16. Composant structurel selon la revendication 15, **caractérisé en ce que** le palier (42) comprend un coussinet (44), lequel est conformé en (hémi-) sphère, en calotte ou analogue et prend appui sur le longeron (34) au nombre d'au moins un par l'intermédiaire d'un tourillon (46) ou analogue, et un dispositif de logement de coussinet (54) qui coopère avec le coussinet (44) et dont une extrémité est fixée à la barre de poussée (40).

17. Composant structurel selon l'une des revendications 10 à 16, **caractérisé en ce qu**'au moins un, de préférence deux éléments de support supplémentaires (60) en particulier en forme de charnière est/sont disposés sur au moins une des parois latérales (20, 20', 20'', 20''') du segment en caisson (16, 16', 16'', 16''') au nombre d'au moins un pour établir une liaison mobile du composant structurel mobile (10) avec l'agencement structurel (12).

18. Composant structurel selon la revendication 17, **caractérisé en ce qu**'au moins une, de préférence deux, parois latérales (20, 20'') sont prolongées et pourvues, dans la zone d'extrémité (62), de trous (64) destinés à recevoir des tourillons correspondants (66) ou analogues de l'agencement structurel (12) et dont les axes de trous (84) coïncident l'un avec l'autre ou avec l'axe de rotation (86) dudit palier (42).

19. Composant structurel selon l'une des revendications 3 à 18, **caractérisé en ce que** les parois latérales (20, 20', 20'', 20"') et/ou le longeron (34) et/ou les traverses (36) et/ou la barre de poussée (40) sont conformés en profilés creux.

20. Composant structurel selon l'une des revendications 1 à 19, **caractérisé en ce que** les éléments structurels peuvent être reliés entre eux de façon démontable par des éléments de liaison (88) formés au moyen d'un procédé d'infiltration en phase gazeuse, en particulier des vis et analogues, qui sont disposés en particulier dans la zone des parois latérales (20, 20', 20'', 20''') du corps de base (14).

21. Composant structurel selon l'une des revendications 1 à 20, **caractérisé en ce que** les éléments structurels sont pourvus d'une couche de protection pour protéger la céramique de l'oxydation.

22. Utilisation d'un composant structurel mobile pour un agencement structurel à contraintes thermomécaniques selon l'une des revendications 1 à 21, dans laquelle le composant structurel mobile (10) est conformé en volet de commande mobile ou analogue d'un engin volant.

23. Procédé pour la fabrication d'un composant structurel mobile (10) pour un agencement structurel (12) à contraintes thermomécaniques selon l'une des revendications 1 à 22, dans lequel
- au moins un élément structurel est formé par le procédé d'infiltration de polymère et de pyrolyse,
- au moins un élément structurel est formé par le procédé d'infiltration en phase gazeuse, et
- les éléments structurels sont assemblés pour former le composant structurel (10).

24. Procédé selon la revendication 23, **caractérisé en ce que** les éléments structurels sont assemblés au moyen d'éléments de liaison (88) produits par le procédé d'infiltration en phase gazeuse.

25. Procédé selon la revendication 23 pour la production de l'élément structurel au nombre d'au moins un formé par le procédé d'infiltration de polymère et de pyrolyse, dans lequel
- on dépose des pièces de tissu découpées en fibres à haute résistance thermique sur des moules positifs ou dans des empreintes de moulage,
- on imprègne les pièces de tissu découpées avec une résine polymérique organique correspondant à la fibre,
- on les laisse durcir à température élevée et sous pression élevée et
- on soumet le corps de base ainsi formé à un traitement pyrolytique entre env. 900° et 1 600 °C pour produire une matrice renforcée de fibres.

26. Procédé selon la revendication 25, **caractérisé en ce qu**'on réalise le durcissement à environ 200 °C et à environ 5 bar, et le traitement pyrolytique à environ 1 200 °C.

27. Procédé selon la revendication 25 et/ou 26, **caractérisé en ce qu**'on revêt l'élément structurel au moins partiellement d'au moins une couche de protection produite par dépôt chimique en phase gazeuse.

28. Procédé selon l'une des revendications 23 à 27 pour la production de l'élément structurel au nombre d'au moins un formé par le . procédé d'infiltration en phase gazeuse, dans lequel
- on revêt une bande de tissu en fibres à haute résistance thermique au moins partiellement et à distance avec un adhésif,
- on enroule la bande de tissu sous la forme d'une ébauche en fibres sensiblement tubulaire de diamètre approprié,
- on introduit l'ébauche en fibres dans un réacteur d'infiltration en phase gazeuse, et
- on la soumet à une infiltration en phase gazeuse avec gradient sous l'action d'un gaz de traitement à base de méthyle trichlorosilane et d'hydrogène.

29. Procédé selon la revendication 28, **caractérisé en ce que**, au début du procédé, on adopte un gradient de température compris entre environ 700 °C à l'intérieur de l'ébauche tubulaire en fibres et environ 1 150 °C dans la chambre du réacteur.

30. Procédé selon l'une des revendications 23 à 29, **caractérisé en ce qu**'on choisit les fibres à haute résistance thermique dans le groupe constitué des fibres de carbone, de carbure de silicium, d'oxyde d'aluminium, de mullite et/ou de polyborosilazane.
